# EUROPEAN PATENT APPLICATION

(11) **EP 4 491 647 A1**
(43) Date of publication of application: **15.01.2025**
(21) Application number: 23766062.6
(22) Date of filing: 08.03.2023
(51) Int. Cl.: C08F 283/12, C08F 220/34, C08F 220/20, C08F 220/60, C08F 230/08, D21H 21/16, D21H 21/14, D21H 17/34

(54) **COPOLYMER, TREATMENT AGENT, AND PREPARATION METHOD THEREFOR AND USE THEREOF**

(30) Priority: 10.03.2022 CN 202210233638; 10.03.2022 CN 202210233817
(71) Applicant: Beijing Mapu New Materials Co., Ltd., Beijing 100192 (CN)
(72) Inventor: JIANG, Lingfei, Beijing 100192 (CN)
(74) Representative: Calysta NV
(86) International application number: PCT/CN2023/080365
(87) International publication number: WO 2023/169485

(57) **Abstract**

The present invention discloses a copolymer, a treatment agent and a preparation method therefor and the use thereof. The copolymer of the present invention comprises a repeating unit derived from two monomers, wherein monomer I is an organosilicon-modified acrylic monomer, and monomer II is an amino-containing acrylic monomer.

## Description

### Cross reference to related application

The present application claims priority to following Chinese patent applications:
Chinese patent application No. 202210233638.4, filed on March 10, 2022, entitled "copolymer, treatment agent for paper, and paper product"; and
Chinese patent application No. 202210233817.8, filed on March 10, 2022, entitled "water dispersible polymer, composition comprising the polymer, and use thereof.

The disclosures of each of the above applications are incorporated herein by reference in their entirety.

### Field of the Invention

The present invention relates to a copolymer, a treatment agent, and a preparation method therefor and use thereof.

### Background of the Invention

At present, food packaging paper (light weight papers, carton boxes, and mold pulps) is widely used as an environmentally friendly packaging material. Since food may contain both water and oil, food packaging paper should have both water and oil repellent properties, so that it will not damage or contaminate user' hand. There are currently two methods for treating paper to give the paper with water and oil repellent properties. The first method relates to the treatment of paper by compounding it with plastics or by means of coating, leading to the formation of a barrier layer on the surface of the paper and thereby realizing impermeability to water and oil. However, since the paper produced by this way cannot be recycled, it is not taken as an environmentally friendly packaging method.

Another method relates to fluorinated chemical treatment, which can achieve excellent water and oil repellency of the paper due to the low surface tension of fluoride itself. Such method was used to be regarded as an environmentally friendly solution for packaging paper, and it is based on the fluoro chemicals to meet market demand.

CN1149326A discloses the production of paper treatment agents for water and oil repellency by compounding fluorinated polyurethanes and acrylic esters. CN1222166A discloses the production of water and oil repellent treatment agents using fluorinated acrylate polymers. CN102575435B and CN101517018B disclose the production of water and oil repellent treatment agents using different types of fluorinated acrylate polymers. CN100408649C and CN100351339C disclose the production of water and oil repellent agents using different types of fluorinated acrylate polymers. CN1304690C discloses the production of water and oil repellent agents by using fluorinated polyene polyamine.

In recent years, due to the increasing attention of the international community to polyfluoroalkyl substance (PFAS) which had been considered highly stable and not easily degradable, the US Environmental Protection Agency (EPA) has published relevant report: "preliminary risk assessment of the development toxicity associated with exposure of perfluorooctanoic acid and its salts(http://www.epa.gov/opptintr/pfoa/pfoara.pdf), which indicate the concern about the environmental load related to PFAS substances, and at the same time, the US Environmental Protection Agency has published a report on the potential generation of PFAS through the decomposition or metabolism of fluoropolymers, Federal Register (FR Vol68, No. 73/April 16,2003[FRL-2303-8], http://www.epa.gov/opptintr/pfoa/pfoar.pdf). EPA Environmental News For Release: Monday April 14, 2003EPA intensifies scientific investigation of a chemical processing aid(http://www.epa.gov/opptintr/pfoa/pfoafacts.pdf), wherein the related polymer products are widely used in fabric finishing, paper, leather, fire fighting foam and personal care products.

Nevertheless, the fluorine-containing paper treatment agents are reckoned as one of the sources of PFAS. The US Food and Drug Administration (FDA) has also released a relevant study https://www.fda.gov/food/chemical-contaminants-food/and-polyfluoroalkyl-substances-pfas, and enterprises that produce and supply fluorine-containing paper treatment agents have also announced that fluorine-containing products will phase out the paper packaging market by 2023: https://www.fda.gov/food/chemical-contaminants-food/authorized-uses-pfas-food-contact-applications.

Given the above situation, the food packaging industry urgently needs to find an alternative solution to replace the widely used fluorine-containing products. Various companies have disclosed some new solutions.

CN103975107B proposes a barrier coating solution, relating mainly to the means of emulsion polymerization, in which a hydrophilic polymer emulsion is produced by blending starches with surfactants and then applied onto paper by coating. Although such solution does block the permeation of oil and grease, it brings two problems. Firstly, the realization of oil-proof effect requires a large coating amount up to 6-10 grams per square meter. Secondly, it is only applicable to paper machines with coating equipment but cannot be directly applied on paper operation process, resulting in weak process applicability. CN102449077B discloses a process of forming a coating material using modified polyester PET resin, combined with zinc stearate filler. However, such a process requires highly demanding conditions and involves high costs. CN100360612C proposes a process comprising firstly synthesizing a polysiloxane, which is then dispersed in water together with surfactants, adding polyvinyl alcohol as binder followed by a crosslinking catalyst to enable the formation of a macromolecular compound from polysiloxane. Such a process, however, still focuses on coating process.

CN105764980B also proposes a process comprising polymerization of acrylate under emulsification condition by using the cationic surfactant, and the polymer is used in surface treatments, which, however, results in poor oil repellency and cannot be retained on wet end of pulps, and therefore no water or oil repellent effect realized actually. CN112805434A discloses a process for producing treatment agent by polymerizing acrylate in the presence of a cationic surfactant as emulsifying agent, followed by dispersing the resulted polymer with polyether- modified silane. However, the treatment agent produced in this way shows poor water and oil repellent effect, especially for high-temperature oils. Moreover, the treatment agent leads to insignificant water and oil repellent performance when added in wet end of pulps.

### Summary of the Invention

In order to solve at least one of the existing technical problems, the present invention provides a novel copolymer, as well as a preparation method and uses thereof. The polymer is based on non fluorinated technology, is very well water dispersible and therefore can be easily used for treating articles, especially fabric articles, in various ways, thereby endowing them with water and oil repellent properties.

In a first aspect, the present application provides a copolymer comprising a repeating unit derived from monomer I and a repeating unit derived from monomer II, wherein
a) monomer I has the following general formula:

   CH₂=C(R₁)-X-Z

   wherein, X is selected from groups represented by X-1 and groups represented by X-2:

      -C(O)-O-(CH₂)n- X-1

      -C(O)-N(R₂)-(CH₂)n- X-2
   R₁ and R₂ are selected from hydrogen atom or C₁₋C₂₀ alkyl, n is an integer of 1-20, such as an integer of 1-10, or an integer of 1-5;
   Z is selected from the following group:

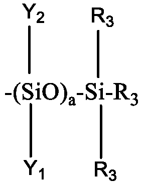

In group Z, R₃, in each occurrence, is independently C₁-C₂₀ alkyl, C₆-C₂₀ aryl, C₁-C₂₀ alkoxy, or a group R₄-O-R₅-, wherein R₄ is C₁-C₁₀ alkyl, R₅ is C₁-C₁₀ alkylene, and 1≤a≤200;
Y₁ and Y₂, in each occurrence, are independently C₁-C₂₀ alkyl or C₆-C₂₀ aryl, or have the following structure: 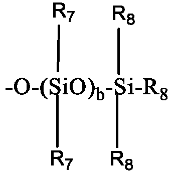
R₇, in each occurrence, is independently C₁-C₂₀ alkyl or C₆-C₂₀ aryl; R₈, in each occurrence, is independently C₁-C₂₀ alkyl, C₆-C₂₀ aryl, C₁-C₂₀ alkoxy or a group R₉-O-R₁₀-, wherein R₉ is C₁-C₁₀ alkyl, R₁₀ is C₁-C₁₀ alkylene, and 0≤b≤200;
b) monomer II has the following general formula:

   CH₂=C(R₁)-P-N(R₃R₄)

   wherein, P is selected from groups represented by P-1 and groups represented by P-2,

   -C(O)-O-(CH₂)n- P-1

   -C(O)-N(R₂)-(CH₂)n- P-2

   wherein, R₁ and R₂ are selected from hydrogen atom or C₁-C₂₀ alkyl, n is an integer of 1-20, such as an integer of 1-10, or an integer of 1-5; R₃ and R₄, in each occurrence, are independently C₁-C₈ alkyl or benzyl, or alternatively, R₃ and R₄ are jointed and, together with the nitrogen atom, form a morpholino, piperidino, or pyrrolidino group.

According to some embodiments of the present invention, the repeating unit derived from monomer I is present in the copolymer in a mass percent of 30-90%, preferably 40-85%, more preferably 50-80%.

According to some embodiments of the present invention, the repeating unit derived from monomer II is present in the copolymer in a mass percent of 10-70%, preferably 10-40%, more preferably 15-35%.

According to some embodiments of the present invention, the repeating unit derived from monomer II is in the form of ammonium salt or nitrogen oxide.

According to some embodiments of the present invention, in monomer I, R₁ and R₂ are selected from hydrogen atom or methyl.

According to some embodiments of the present invention, in group Z, R₃, in each occurrence, is independently C₁-C₁₀ alkyl, C₆-C₁₀ aryl, C₁-C₁₀ alkoxy, or a group R₄-O-R₅-, R₄ is C₁-C₁₀ alkyl, R₅ is C₁-C₁₀ alkylene, and 1≤a≤100; R₇, in each occurrence, is independently C₁-C₁₀ alkyl or C₆-C₁₀ aryl; R₈, in each occurrence, is independently C₁-C₁₀ alkyl, C₆-C₁₀ aryl, C₁-C₁₀ alkoxy or a group R₉-O-R₁₀-, wherein R₉ is C₁-C₁₀ alkyl, R₁₀ is C₁-C₁₀ alkylene, and 0≤b≤100.

According to some embodiments of the present invention, in monomer II, R₁ and R₂ are selected from hydrogen atom or methyl; R₃ and R₄ are respectively and independently C₁-C₃ alkyl, or alternatively, R₃ and R₄ are jointed and, together with the nitrogen atom, form a morpholino, piperidino, or pyrrolidino group.

According to some embodiments of the present invention, Z is selected from the following structures:

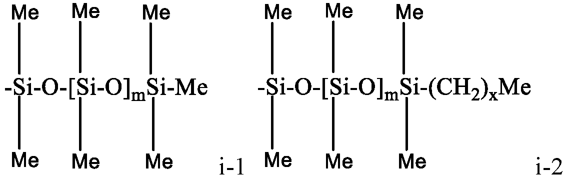

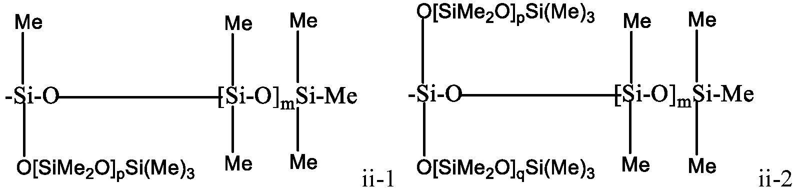

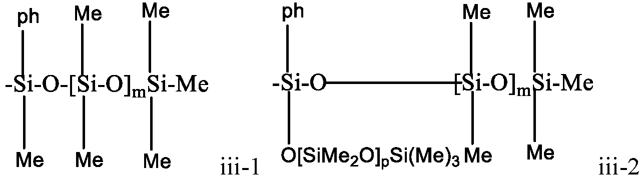

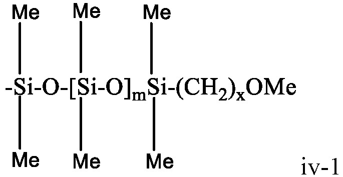

Me represents methyl, ph represents phenyl, 1≤m+1≤200, preferably 1≤m+1≤100; 0≤p≤200, preferably 0≤p≤100; 0≤q≤200, preferably 0≤q≤100; 1≤x≤19, preferably 1≤x≤10.

According to some embodiments of the present invention, monomer II is selected from one or multiple combination of dimethylaminoethyl (meth)acrylate, dimethylaminopropyl (meth)acrylate, diethylaminoethyl (meth)acrylate, diethylaminopropyl (meth)acrylate, dimethylaminoethyl (meth)acrylamide, diethylaminoethyl (meth)acrylamide, dipropylaminoethyl (meth)acrylamide, dimethylaminopropyl (meth)acrylamide, diethylaminopropyl (meth)acrylamide, dipropylaminopropyl (meth)acrylamide.

According to some embodiments of the present invention, the copolymer further comprises a repeating unit derived from other monomer, said other monomer is selected from at least one of monomer III, monomer IV and monomer V, and
monomer III has the following general formula:

   CH₂=C(R₁)-G-(R₂O)_{q}-R₃
wherein, G is selected from groups represented by G-1 and groups represented by G-2,

   -C(O)-O-(CH₂)n- G-1

   -C(O)-N(R₄)-(CH₂)n- G-2
in these formulas, R₁ represents hydrogen atom or methyl, G is selected from a group represented by G-1 or G-2, R₂ is C₂-C₄ alkylene, wherein alkylene groups with different numbers of carbon atoms may be present in one molecule, q is an integer of 1-50, R₃ represents hydrogen atom or C₁-C₂₀ alkyl, R₄ represents hydrogen atom or methyl, n is an integer of 0-10;
monomer IV is a monomer having an anionic group and polymerizable unsaturated group, wherein the anionic group is a carboxylic or sulfonic group;
monomer V is selected from a monomer having a pyrrolidone structure and a polymerizable unsaturated group, a monomer having a blocked isocyanate group and a polymerizable unsaturated group, a monomer having an alkoxysilyl group and a polymerizable unsaturated group or a monomer having a glycidyl group and a polymerizable unsaturated group.

According to some embodiments of the present invention, the repeating unit derived from monomer I is present in the copolymer in a mass percent of 30-90%, preferably 40-85%, more preferably 50-80%; the repeating unit derived from monomer II is present in the copolymer in a mass percent of 5-65%, preferably 10-40%, more preferably 15-35%; and the repeating unit derived from the other monomers is present in the copolymer in a mass percent of 1-30%.

According to some embodiments of the present invention, monomer III is selected from one or more of 2-hydroxyethyl (meth)acrylate, 2-hydroxypropyl (meth)acrylate, 2-hydroxybutyl (meth)acrylate, 4-hydroxybutyl (meth)acrylate, polyethylene glycol mono(meth)acrylate, polypropylene glycol mono(meth)acrylate, methoxy polyethylene glycol (meth)acrylate.

According to some embodiments of the present invention, monomer IV is selected from (meth)acrylic acid, butenoic acid, maleic acid, fumaric acid, itaconic acid, citraconic acid, vinyl sulfonic acid, (methyl) allyl sulfonic acid, styrene sulfonic acid, vinyl benzene sulfonic acid, acrylamido tertbutyl sulfonic acid, or salts thereof.

According to some embodiments of the present invention, monomer Visa monomer having a pyrrolidone structure and a polymerizable unsaturated group, a monomer having a blocked isocyanate group and a polymerizable unsaturated group, a monomer having an alkoxysilyl group and a polymerizable unsaturated group, or a monomer having a glycidyl group and a polymerizable unsaturated group.

According to some embodiments of the present invention, the repeating units derived from said monomer III, IV and V are present in a mass percent of 1-30%.

Further, the present invention provides a treatment agent comprising the above copolymer and a solvent, wherein the solvent comprises water and/or an organic solvent, preferably, the organic solvent being one or more of acetone, 2-butanone, 4-methyl-2-pentanone, ethyl acetate, butyl acetate, N-methyl-2-pyrrolidone, N,N-dimethylformamide, ethanol, isopropanol, n-propanol, butyl carbitol, and dipropylene glycol monomethyl ether.

Further, the present invention provides a method for preparing the above treatment agent, comprising the following steps:
(1) polymerizing monomers in an organic solvent to obtain a copolymer solution;
(2) optionally, adding water to the copolymer solution for dispersion, and then removing the organic solvent; or alternatively, removing the solvent firstly and then adding water for dispersion;
(3) optionally, adding an acid to the copolymer solution for converting an amino group into an ammonium salt;
(4) optionally, treating the copolymer solution with an aqueous hydrogen peroxide for converting the amino group into a nitrogen oxide.

In addition, the present invention further provides a treating method, comprising treating an article to be treated with the above copolymer or the above treatment agent or the treatment agent produced by the above method, and preferably, said treatment includes surface coating treatment or padding treatment.

The present invention further provides a use of the above copolymer or the above treatment agent or the treatment agent prepared by the above method in the process of surface coating treatment or padding treatment for fiber fabrics, leathers, non-woven fabrics, asbestos, furs, concretes, natural stones, paper or plastics.

The present invention further provides a use of the above copolymer or the above treatment agent or the treatment agent prepared by the above method in paper products, preferably, the use is surface coating treatment, surface sizing treatment, or wet end treatment for paper sheets, carton boxes, or pulp molding products.

The present invention further provides a product treated by the above copolymer or the above treatment agent or the treatment agent prepared by the above method, wherein the product is fiber fabrics, leathers, non-woven fabrics, asbestos, furs, concretes, natural stones, paper or plastics.

The present invention further provides a paper product, comprising paper and the above copolymer or the above treatment agent or the treatment agent produced by the above method, associated with the paper (internally and/or on surface).

### Effects of the invention

The copolymer of the present invention, as well as the treatment agent comprising the same, can be easily dispersed with water and applied to surface treatment of various articles, such as fiber fabrics, leathers, non-woven fabrics, asbestos, furs, concretes, natural stones, paper, and plastics, wherein the means of treating comprises coating and padding treatment, and the surface of the treated articles may be endowed with water and oil repellency. Especially, the copolymer of the present invention, as well as the treatment agent comprising the same, can be applied in various ways of paper treating, such as coating treatment, surface sizing treatment, and wet end addition, and can endow paper with high water and oil repellency after the treatment.

### Detailed description of the invention

The monomer I has the following general formula:

CH₂=C(R₁)-X-Z

wherein, X is selected from groups represented by X-1 and groups represented by X-2,

   -C(O)-O-(CH₂)n- X-1

   -C(O)-N(R₂)-(CH₂)n- X-2
R₁ and R₂ are selected from hydrogen atom or C₁₋C₂₀ alkyl, n is an integer of 1-20;
Z is selected from the following group: 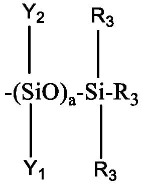
in group Z, R₃, in each occurrence, is independently C₁-C₂₀ alkyl, C₆-C₂₀ aryl, C₁-C₂₀ alkoxy or a group R₄-O-R₅-, wherein R₄ is C₁-C₁₀ alkyl, R₅ is C₁-C₁₀ alkylene, and 1≤a≤200;
Y₁ and Y₂, in each occurrence, are independently C₁-C₂₀ alkyl or C₆-C₂₀ aryl, or represented by the following group: 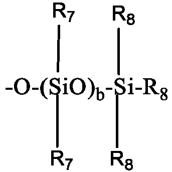
R₇, in each occurrence, is independently C₁-C₂₀ alkyl or C₆-C₂₀ aryl; R₈, in each occurrence, is independently C₁-C₂₀ alkyl, C₆-C₂₀ aryl, C₁-C₂₀ alkoxy or a group R₉-O-R₁₀-, wherein R₉ is C₁-C₁₀ alkyl, R₁₀ is C₁-C₁₀ alkylene, and 0≤b≤200.

In particular, R₃ and R₈ represent C₁-C₁₀ alkyl, C₁-C₁₀ alkoxy, and C₆-C₁₀ aryl, in particular commonly used C₁-C₈ alkyl, C₁-C₄ alkoxy, such as methyl, ethyl, propyl, butyl, amyl, hexyl, heptyl, octyl, methoxy, ethoxy, propoxy, butoxy, and the like; aryl such as phenyl, tolyl, naphthyl, and the like. R₃ and R₈ may further have the structure of (R₉-O-R₁₀)-, wherein R₉ is C₁-C₁₀ alkyl, R₁₀ is C₁-C₁₀ alkylene; such as commonly used CH₃O(CH₂)ₓ- and the like. R₇ is the one group selected from C₁-C₂₀ alkyl and C₆-C₂₀ aryl, for example, alkyl may be methyl, ethyl, propyl, butyl, pentyl, hexyl, heptyl, octyl, nonyl, decyl, undecyl, dodecyl, hexadecyl, and the like, and aryl may be phenyl, tolyl, naphthyl, and the like.

For example, Z is generally selected from the following groups:

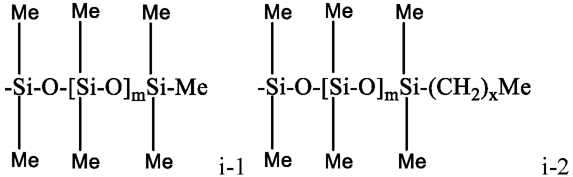

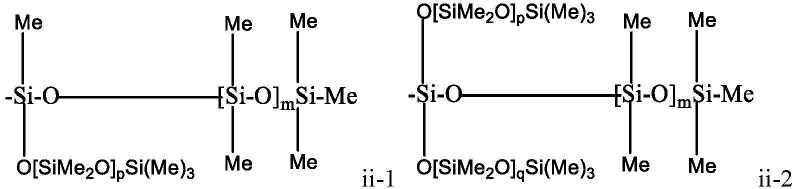

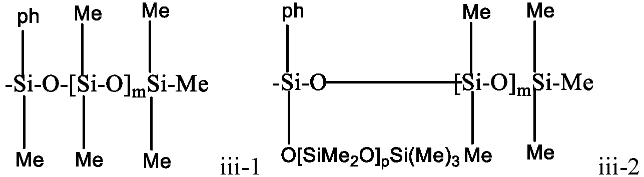

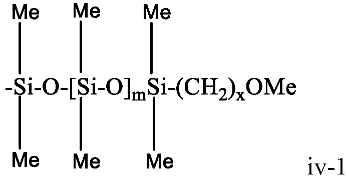

Me represents methyl, ph represents phenyl, 1≤m+1≤200, preferably 1≤m+1≤100; 0≤p≤200, preferably 0≤p≤100; 0≤q≤200, preferably 0≤q≤100; 1≤x≤19, preferably 1≤x≤10.
monomer II has the following general formula:

   CH₂=C(R₁)-P-N(R₃R₄)
wherein, P is selected from groups represented by P-1 and groups represented by P-2:

   -C(O)-O-(CH₂)n- P-1

   -C(O)-N(R₂)-(CH₂)n- P-2
wherein, R₁ and R₂ are selected from hydrogen atom, C₁-C₂₀alkyl, n is an integer of 1-20; R₃ and R₄, in each occurrence, are independently C₁-C₈ alkyl or benzyl, or alternatively, R₃ and R₄ are jointed and, together with the nitrogen atom, form a morpholino, piperidino, or pyrrolidino group.
R₃ and R₄ are preferably alkyl having 1-8 carbon atoms, and particularly preferably methyl or ethyl.

The polymerization units in polymers derived from the amino monomer II can be either one or multiple combination.

Examples of the amino monomer II include dimethylaminoethyl (meth)acrylate, dimethylaminopropyl (meth)acrylate, diethylaminoethyl (meth)acrylate, diethylaminopropyl (meth)acrylate, dimethylaminoethyl (meth)acrylamide, diethylaminoethyl (meth)acrylamide, dipropylaminoethyl (meth)acrylamide, dimethylaminopropyl (meth)acrylamide, diethylaminopropyl (meth)acrylamide, dipropylaminopropyl (meth)acrylamide, and the like.

The nitrogen in the amino monomer is a tertiary nitrogen atom, which can be converted into amine oxide under oxidant condition or into a cationic ammonium salt by adding acid, and thereby further enhancing the performance of the polymer, such as water solubility stability.

As amino monomer II, examples are the followings.

CH₂=C(R)COO(CH₂)₂N(CH₃)₂;

CH₂=C(R)COO(CH₂)₃N(CH₃)₂;

CH₂=C(R)COO(CH₂)₂N(CH₂CH₃)₂;

CH₂=C(R)COO(CH₂)₃N(CH₂CH₃)₂;

CH₂=C(R)COOCH₂CH(OH)CH₂N(CH₃)₂;

CH₂=C(R)COOCH₂CH(OH)CH₂N(CH₂CH₃)₂;

CH₂=C(R)-CONH(CH₂)₂N(CH₃)₂;

CH₂=C(R)-CONH(CH₂)₃N(CH₃)₂;

CH₂=C(R)-CONH(CH₂)₂N(CH₂CH₃)₂;

CH₂=C(R)-CONH(CH₂)₃N(CH₂CH₃)₂;

in the above formulas, R is hydrogen atom or C₁-C₄ alkyl.

Repeating units having ammonium salts can be prepared through reaction through adding acids. Examples of the acid include an inorganic acid (such as hydrogen halide (hydrochloric acid, hydrogen bromide, or hydrogen iodide), sulfuric acid, nitric acid; and organic acid such as formic acid, acetic acid, glycolic acid, malic acid, citric acid, itaconic acid, and the like. Organic acids are more commonly used, wherein formic acid and acetic acid, due to their smaller molecules, have higher volatility and stronger odor. The amount of acid added can range from 10% mole equivalent to 200% mole equivalent, with the most common being 100% mole equivalent, relative to 1 mole equivalent of amino in the repeating unit II with amino group.

Monomer II can also be converted into N-oxides through reaction with added peroxides. Examples of peroxide oxidants include hydrogen peroxide, persulfuric acid, m-chloroperoxybenzoic acid, and other peroxycarboxylic acids. The amount of the oxidant added can range from 5% mole equivalent to 100% mole equivalent, with the most common being 50% mole equivalent, relative to 1 mole equivalent of amino group in the repeating unit II with amino group.

The amino group in the repeating unit II derived from amino monomer is preferably modified into ammonium salt or N-oxide. The repeating unit II derived from amino monomer preferably comprises any one of the followings:
(i) an ammonium salt;
(ii) N-oxide;
(iii) a combination of ammonium salt and N-oxide;
in the combination of (iii), the molar equivalence ratio of the ammonium salt to the N-oxide can be 1:9-9:1.

As monomer III, the following compounds are preferred:
2-hydroxyethyl (meth)acrylate, 2-hydroxypropyl (meth)acrylate, 2-hydroxybutyl (meth)acrylate, 4-hydroxybutyl (meth)acrylate, polyethylene glycol mono(meth)acrylate, polypropylene glycol mono(meth)acrylate, methoxypolyethylene glycol (meth)acrylate, and the like, having the following typical structural formulas:

   CH₂=C(R)-C(O)-O-CH₂CH₂OH;

   CH₂=C(R)-C(O)-(CH₂CH₂O)₂H;

   CH₂=C(R)-C(O)-O-(CH₂CH₂O)₃H;

   CH₂=C(R)-C(O)-O(CH₂CH₂O)₁₁H;

   CH₂=C(R)-C(O)-O-(CH₂CH₂O)₁₂H;

   CH2=C(R)-C(O)-N(R)-CH₂OH

   CH₂=C(R)-C(O)O-CH₂CH₂OCH₃;

   CH₂=C(R)-C(O)O-CH₂CH₂OCH₂CH₃;

   CH₂=C(R)-C(O)O-CH₂CH₂OCH₃;

   CH₂=C(R)-C(O)O-CH₂CH₂OCH₂CH₃;
in the above formulas, R is hydrogen atom or alkyl having 1-4 carbon atoms.

Monomer IV is a monomer having an anionic group and a polymerizable unsaturated group, and the anionic group may be a carboxylic or sulfonic group. Examples of monomer IV includes (meth)acrylic acid, butenoic acid, maleic acid, fumaric acid, itaconic acid, citraconic acid, vinyl sulfonic acid, (methyl)allyl sulfonic acid, styrene sulfonic acid, vinyl benzene sulfonic acid, acrylamido tertbutyl sulfonic acid or salts thereof, wherein the most commonly used is (meth)acrylic acid.

Monomer V: those copolymers having favored properties further comprise monomer V.

Monomer V is selected from: monomers having a pyrrolidone structure and a polymerizable unsaturated group, and monomers having a blocked isocyanate group, an alkoxy silyl, or a glycidyl group and a polymerizable unsaturated group.

As the monomer having pyrrolidone structure and polymerizable unsaturated group, exemplary compounds that can be enumerated includes N-vinyl-2-pyrrolidone, N-vinyl-3-methyl-2-pyrrolidone, N-vinyl-4-methyl-2-pyrrolidone, N-vinyl-5-methyl-2-pyrrolidone, N-vinyl-3,3-dimethyl -2-pyrrolidone.

As the monomer having a blocked isocyanate group and a polymerizable unsaturated group, exemplary compounds that can be enumerated include: 2-butanone oxime adduct of 2-isocyanato ethyl (methyl)acrylate, pyrazolo adduct of 2-isocyanato ethyl (meth)acrylate, 3,5-dimethyl pyrazolo adduct of 2-isocyanato ethyl (meth)acrylate, 3-methyl pyrazolo adduct of 2-isocyanato ethyl (meth)acrylate, ε-caprolactam adduct of 2-isocyanato ethyl (meth)acrylate, 2-butanone oxime adduct of 3-isocyanato ethyl (meth)acrylate, pyrazolo adduct of 3-isocyanato ethyl (meth)acrylate, 3,5-dimethyl pyrazolo adduct of 3-isocyanato ethyl (meth)acrylate, 3-methyl pyrazolo adduct of 3-isocyanato ethyl (meth)acrylate, ε-caprolactam adduct of 3-isocyanato ethyl (meth)acrylate, 2-butanone oxime adduct of 4-isocyanato ethyl (meth)acrylate, pyrazolo adduct of 4-isocyanato ethyl (meth)acrylate, 3,5-dimethyl pyrazolo adduct of 4-isocyanato ethyl (meth)acrylate, 3-methyl pyrazolo adduct of 4-isocyanato ethyl (meth)acrylate, ε-caprolactam adduct of 4-isocyanato ethyl (meth)acrylate.

As the monomer having an alkoxy silyl and a polymerizable unsaturated group exemplary compounds that can be enumerated include 3-methacryloxypropyl trimethoxy silane, 3-methacryloxypropyl dimethoxy methyl silane, 3-methacryloxypropyl triethoxy silane, 3-methacryloxypropyl diethoxy ethyl silane, allyl trimethoxy silane.

As the monomer having a glycidyl group and a polymerizable unsaturated group, exemplary compounds that can be enumerated include glycidyl (meth)acrylate and the like.

In the present invention, monomer I may be present in a mass percent of from 30 to 90%, such as 35%, 40%, 45%, 50%, 55%, 60%, 65%, 70%, 75%, 80%, 85%, 90%, preferably 40-85%, more preferably 50-80%;

Monomer II may be present in a mass percent of from 5 to 65%, such as 10%, 15%, 20%, 25%, 30%, 35%, 40%, 45%, 50%, 55%, 60%, 65%, preferably 10-40%, more preferably 15-35%.

In the present invention, the amount of monomer I present may be from 30 to 90%, such as 35%, 40%, 45%, 50%, 55%, 60%, 65%, 70%, 75%, 80%, 85%, 90%, preferably 40-85%, more preferably 50-80%, which mainly functions to provide water and oil repellency.

The amount of monomer II present may be from 10 to 70%, such as 10%, 15%, 20%, 25%, 30%, 35%, 40%, 45%, 50%, 55%, 60%, 65%, preferably 10-40%, more preferably 15-35%, which mainly functions to provide water solubility and make polymers positively charged.

Monomer III may be present in a mass percent of 1-30%, such as 1%, 5%, 8%, 10%, 15%, 20%, 25%, 30%, preferably 1-15%, which mainly functions to improve the intimacy with fibers.

Monomer IV may be present in a mass percent of 1-30%, such as 1%, 5%, 8%, 10%, 15%, 20%, 25%, 30%, preferably 1-15%, which mainly functions to improve the water solubility of polymer.

Monomer V may be present in a mass percent of 1-30%, such as 1%, 5%, 8%, 10%, 15%, 20%, 25%, 30%, preferably 1-15%, which mainly functions to improve some properties of the polymer.

The weight average molecular weight of the copolymer generated from the above monomers I-IV in the present invention can be 1,000-1,000,000, preferably 4,000-500,000. The weight average molecular weight can be measured by gel chromatography and converted to polystyrene value.

The present invention has no particular restriction on the polymerization mode of copolymer, which can be practiced by conventional free radical polymerization mode, such as bulk polymerization, solution polymerization in organic solvents and emulsion polymerization in water.

In the implementation of present invention, it is preferred to obtain an aqueous dispersion through polymerization (such as solution polymerization or emulsion polymerization) followed by addition of water and then solvent removal; or alternatively, followed by solvent removal and then addition of water.

As to the selection of organic solvent, it can be selected from ketones, esters, alcohols and the likes, such as acetone, methyl ethyl ketone, 4-methyl -2-pentanone, ethyl acetate, butyl acetate, N-methyl-2-pyrrolidone, N,N-dimethyl formamide, ethanol, isopropanol, n-propanol, butyl carbitol, dipropylene glycol monomethyl ether, etc. These organic solvents can be used singly or in combination.

The emulsifying agent added into water for emulsification after emulsion polymerization or solution polymerization can be selected from various anionic, cationic and non-ionic emulsifying agents for general purposes.

As initiator for polymerization, it can be selected from peroxides, azo compounds, or persulfuric acid compounds, and oil- or water- soluble initiator can be used depending on the polymerization system.

Examples of oil-soluble initiator for polymerization are preferably 2,2'-azodi(2-methyl propionitrile), 2,2'-azodi(2-methyl butyronitrile), 2,2'-azodi(2,4-dimethyl valeronitrile), 2,2'-azodi(2,4-dimethyl-4-methoxyvaleronitrile), 1,1'-azodi(cyclohexane-1-carbonitrile), dimethyl-2,2'-azodi(2-methyl propionate), benzoyl peroxide, di-tert-butyl peroxide, lauroyl peroxide, cumene hydroperoxide, tertbutyl peroxypivalate, diisopropyl peroxydicarbonate, and the like.

Examples of water-soluble initiator for polymerization are preferably 2,2'-azodiisobutyl imidine dihydrochloride, 2,2'-azodi(2-methyl propionamidine) hydrochloride, 2,2'-azobis[2-(2-imidazolin-2-yl)propane] hydrochloride, 2,2'-azobis[2-(2-imidazolin-2-yl)propane]sulfate hydrate, 2,2'-azobis[2-(5-methylimidazolin-2-yl)propane] hydrochloride, potassium persulfate, barium persulfate, ammonium persulfate, hydrogen peroxide, tertbutyl hydrogen peroxide, and the like.

The initiator for polymerization preferably has a half life of 10 hours, preferably being selected from peroxide or azo compound having a decomposition temperature of 40°C or more such as tertbutyl peroxypivalate, 2,2'-azodi(2,4-dimethyl valeronitrile) and the like.

The amount of initiator added may be 0.1-5 parts by weight, relative to 100 parts by weight of the monomer.

During the polymerization process, molecular weight regulator can be added in certain amount as needed, and examples commonly used include mercapto compounds, such as 2-mercaptopropanoic acid, 2-mercaptoethanol, alkyl mercaptan, mercaptopropionic acid, and the like. The addition amount of molecular weight regulator may be 0-10 parts, and preferably 0.01-5 parts, relative to 100 parts by weight of the monomer.

A typical process of the solution polymerization of the present invention may be implemented as follows: adding solvent followed by corresponding monomers to be dissolved, replacing the atmosphere with nitrogen for oxygen removal, adding initiator, raising the temperature of the reaction to the desired reaction temperature, i.e., 40-120°C, and allowing the reaction to proceed for 4-20 hours.

Another commonly used polymerization mode is emulsion polymerization carried out by means of emulsifying monomers with emulsifying agents, and concretely comprises the following operations: adding monomer and emulsifying agent into water, stirring for emulsification, replacing the atmosphere with nitrogen, adding water-soluble initiator, raising the temperature of the reaction to the desired reaction temperature, i.e., 40-90°C, and allowing the reaction to proceed for 4-20 hours.

In order to obtain a stable polymer dispersion, a high-pressure homogenizing emulsification machine or an ultrasonic dispersion equipment can be used to forcefully disperse and emulsify the polymerization system, so that very stable emulsified particles may be firstly formed from the monomers, which is then initiated for polymerization. As examples of extensively used emulsifying agent, mention can be made to anionic, cationic, or nonionic emulsifying agents, which can be used in an amount of 0.5-10 parts by weight, more usually 1-5 parts by weight, relative to 100 parts by weight of the monomer.

The treatment agent of the present invention may be in the form of solution or emulsion. The treatment agent comprises copolymers, water, and organic solvents, wherein the copolymer is present in an amount of 1-50% by weight, preferably 2-30% parts by weight.

The manufacturing procedure of the treatment agent of the present invention is as follows:
(1) adding monomers I and II, and optional monomers III, IV, and V in a certain ratio into organic solvent, followed by adding initiator for polymerization;
(2) as appropriate, after the polymerization is completed, adding water for dispersion and removing the organic solvent, or alternatively removing the solvent firstly and then adding water for dispersion;
(3) as appropriate, adding acids to convert the amino group in the polymer into ammonium salt;
(4) as appropriate, adding oxidants to the above dispersion for oxidation treatment.

The removal of organic solvent from polymer solution can be achieved by means of reduced-pressure distillation by heating, with temperature controlled at 40°C or more, preferably at 60-120°C, and can be carried out before or after the addition of water for dispersion, wherein the amount of water added can be 100-2000 parts relative to 100 parts by weight of the polymer.

The oxidant can be added so that all amino groups in the monomer II are converted into N-oxide, and the amount of oxidant added may be 0.1-10 parts relative to 100 parts by weight of the polymer.

There is no particular restriction on the item to be treated with the water dispersible treatment agent composition of the present invention, examples include fiber fabrics, leathers, non-woven fabrics, asbestos, furs, concretes, natural stones, paper, plastics, and the like, wherein better effect may be achieved for fiber fabrics, paper, and natural stones, among others.

The composition solution formed by the copolymer of the present invention can be used for treating all kinds of paper, including from paper boxes weighting up to 300g per unit area (m²) to kraft paper weighting up to 80g per unit area (m²), from thin paper sheet weighting up to 100g per unit area (m²) to pulp molding products weighting up to 200g per unit area (m²).

The raw materials for paper products can be chemical bleached pulp or unbleached pulp, wood pulp, chemi-machanical pulp, mechanical pulp, and the like, or the same pulp added with resin components such as polyamide, polyolefin, polyvinyl alcohol, and the like.

Such papers are generally added with a sizing agent to improve the water repellency of the paper. Examples of commonly used sizing agent include cationic rosin size, anionic rosin size, alkyl ketene dimer (AKD) sizing agent, alkenyl succinic anhydride ASA sizing agent and cationic styrene acrylic emulsion. The sizing agent can be applied in an amount of 0.01-5% by weight of the pulp.

In addition to the sizing agent, other additives may also be added to enhance paper performances, such as modified starch, carboxymethyl cellulose, epichlorohydrin modified polyamide reinforcing agent, retention aid, dye, brightener, air entraining agent, defoamer, and others generally used in paper manufacturing.

Examples of fiber fabrics include natural fiber of animal and plant source, such as cotton, linen, wool, and silk; synthetic fiber such as polyamide, polyester, polyvinyl alcohol, polyacrylonitrile, polyvinyl chloride, and polypropylene; semi-synthetic fiber such as rayon and cellulose acetate; inorganic fiber such as glass fiber, carbon fiber, asbestos fiber; or mixtures of them.

### Fiber fabrics testing method - fabric treatment

The fabric treated in the investigation can include dyed 100% polyester fabric and 100% khaki cotton diagonal fabric. The fabric sample is placed in a concentration of 3% aqueous solution of the treatment agent composition of the present invention for padding treatment (wet pick up rate of 60%), and then dried at 130°C for 3 minutes. The treated sample fabric is evaluated for water and oil repellency.

### Fiber fabrics testing method -water repellency

According to the method specified in Teflon global specifications and quality control testing, the sample cloth is tested using liquids containing different volume percentage of isopropanol to observe and determine the degree of surface wetting. This test provides a rough indication of water resistance. The higher the water resistance level, the better the resistance of the final substrate to water-based substances. The compositions of the standard test liquids are shown in Table 1.

**Table 1 Compositions of testing liquid for water repellency rating**

| Water repellency rating | % by volume, isopropanol | % by volume, water |
|---|---|---|
| 1 | 2 | 98 |
| 2 | 5 | 95 |
| 3 | 10 | 90 |
| 4 | 20 | 80 |
| 5 | 30 | 70 |
| 6 | 40 | 60 |
| 7 | 50 | 50 |
| 8 | 60 | 40 |
| 9 | 70 | 30 |
| 10 | 80 | 20 |
| 11 | 90 | 10 |
| 12 | 100 | 0 |

### Fiber fabrics testing method -spray test

The dynamic water repellency of the treated substrate is determined according to the American Association of Textile Chemists and Colorists (AATCC) TM-22, and reference is made to the published standards.
Score 100 represents no wetting on the specimen surface;
Score 90 represents minor wetting on the specimen surface;
Score 80 represents wetting at the spraying point on the specimen surface;
Score 70 represents partial wetting of the upper surface of the specimen;
Score 50 represents complete wetting of the upper surface of the specimen;
Score 0 represents wetting of both upper and lower surface of the specimen.

A lower value indicates a gradual increasing in wettability and permeability.

### Fiber fabrics testing method -oil repellency

Oil repellency is determined according to the test method described in the specification AATCC-TM118, the basic operation of which comprises dropping the testing oils with different surface tensions onto the tested fabrics. Higher grade means better oil resistance. The composition of the standard test liquid is shown in Table 2.

**Table 2 Compositions of testing liquid for oil repellency rating**

| Oil repellency rating | Testing liquid | Surface tension mN/m |
|---|---|---|
| 8 | n-heptane | 20.0 |
| 7 | n-octane | 21.8 |
| 6 | n-decane | 23.5 |
| 5 | n-dodecane | 25.0 |
| 4 | n-tetradecane | 26.7 |
| 3 | n-hexadecane | 27.3 |
| 2 | 65 parts of liquid mineral oil/35 parts of n-hexadecane | 29.6 |
| 1 | liquid mineral oil | 31.2 |

### Paper processing and testing procedures

Paper products that can be processed include light weight paper, thick paper, cardboards, mold pulp products or the like, varying from paper boxes weighting up to 300 g per unit area (m²) to kraft paper weighting up to 80 g per unit area (m²), from light weight paper sheet weighting up to 100 g per unit area (m²) to mold pulp products weighting up to 200 g per unit area (m²).

The raw materials for paper products can be chemical bleached pulp or unbleached pulp, wood pulp, chemi-machanical pulp, mechanical pulp, and the like, or the same pulp added with resin components such as polyamide, polyolefin, polyvinyl alcohol, and the like. The procedure for paper processing is as follows.

### (1) Examples for surface coating treatment:

### Production of test paper: paper weight 230 g/m²

The paper is composed of five layers in which the bottom and top layers are made of chemical pulp board LBKP (laubh 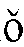 lxer bleached kraft pulp) and NBKP (northern bleached kraft pulp) in a ratio of 7:3; and the middle three layers are made of chemical pulp or mechanical pulp boards, which are composited on a paper machine to form a cardboard weighing 230 g/m².

The starch for coating is made of cassava starch MS-1 coating type available from Guangxi Mingyang Biochemical Company. The starch is added to water to a concentration of 20%, heated to more than 90°C to cook the starch, followed by adding formulated paper treating agent at a concentration of 1-20%. The starch is controlled at a temperature of not less than 50°C and coated

onto the top layer of the cardboard using a paper coating machine, at a coat loading weight of 3-8 g/m².

### (2) Examples for surface sizing treatment:

### Production of test paper: paper weight 50 g/m²

Chemical pulp board LBKP (laubhǒlxer bleached kraft pulp) and NBKP (northern bleached kraft pulp) are mixed at a ratio of 5:5 and subjected to beating until a Canadian Standard Freeness of 200ml. During the paper making process, cationic starch MC-2 type available from Guangxi Mingyang Biochemical Company is added at an amount of 2% parts by weight of the pulp board. A light weight paper sheet with a weight of 50 g/m² was made using a fourdrinier machine.

The starch solution is made of a non-ionic modified hydroxyethyl starch, i.e., Penford Gum 290 starch available from Penford Company, with a concentration of 5%. The starch solution is firstly heated to more than 90°C to cook the starch, and followed by adding the formulated treatment agent at a concentration of 1-20% parts by weight. The starch solution is controlled at a temperature of not less than 70°C and used for surface sizing until a wet pick up rate more than 70%. The sized pulp board is subjected to drying to obtain the treated paper.

### (3) Wet end treatment: pulp molding weight 350 g/m²

Bagasse pulp boards are beaten in water with a pulp concentration of 0.3% until a Canadian Standard Freeness of 600 ml, to which is sequentially added alkyl ketene dimer (AKD) sizing agent at an amount of 2% parts by weight of the pulp, and formulated treatment agent at an amount of 1-20% parts by weight of the pulp.

The paper pulp is poured at a specified weight into a filter screen in a 10 inch disc mold, vacuum filtered to remove water, and dried in the mold at 150°C for 120 seconds. The resulted disc tableware is subjected to evaluation for water and oil repellency.

### Evaluation of water and oil repellency

The following examples and comparative examples are concrete illustrations of the present invention, but the present invention is not limited thereto. Unless specified otherwise, adding amounts in % refer to parts by weight.

The following test methods are used.

### Evaluation of oil repellency

### (1) TAPPI test kit for oil repellency evaluation

Oil repellency (kit method) is tested according to the specification of TAPPI T-559cm-02. The test is conducted using testing agents obtained by mixing castor oil, toluene, and n-heptane in the volume ratios shown in the table below. The test results are represented by rating number, and higher rating number means better oil repellency. Concretely, a sample of processed paper is spread on a stain-free surface, and the testing agent is dropped onto the surface and held for 15 seconds and then wiped off with blotting paper to observe if there is any permeation. Samples without permeation is rated as qualified and allowed to proceed to a higher level of testing.

The testing agent is formulated according to the formula in Table 3

**Table 3 Compositions of testing agents for Kit test of oil repellency of paper products**

| Kit | Castor oil (ml) | Toluene (ml) | Heptane(ml) |
|---|---|---|---|
| 1 | 100 | 0 | 0 |
| 2 | 90 | 5 | 5 |
| 3 | 80 | 10 | 10 |
| 4 | 70 | 15 | 15 |
| 5 | 60 | 20 | 20 |
| 6 | 50 | 25 | 25 |
| 7 | 40 | 30 | 30 |
| 8 | 30 | 35 | 35 |
| 9 | 20 | 40 | 40 |
| 10 | 10 | 45 | 45 |
| 11 | 0 | 50 | 50 |
| 12 | 0 | 45 | 55 |

### (2) Hot-oil resistant test

The treated paper is shaped into a container for holding liquids, into which is poured hot oil (salad oil, peanut oil, rapeseed oil) at 85°C and held for 20 minutes to observe if there is any permeation. Rating by score is made based on observation results. This test is mainly adopted in the pulp molding industry.
Score 5 represents no surface discoloration;
Score 4 represents minor surface discoloration;
Score 3 represents surface discoloration and minor permeation;
Score 2 represents severe permeation;
Score 1 represents extremely severe leakage with slow dripping of oil;
Score 0 represents extremely severe leakage with rapid dripping of oil.

### Evaluation of water repellency -Cobb test

### (1) Cobb test

This test is conducted according to the specification of GB/T1540-2002 or ISO 535:1991, and its principle is to determine the weight (g) of water absorbed by 100 cm² paper supporting water of a 10mm height during a time period of 1 minute. The result is reported as water weight per 1 square meter (g/m²).

The instrument used in Cobb absorption test is generally a flipped cylinder tester, wherein the metal cylinder is a cylindrical body, with an internal cross-sectional area of (100±0.2) cm² and a corresponding internal diameter of (112.8±0.2) mm. If a cylinder with small cross-sectional area is used, the cross-sectional area should generally not be less than 50 cm², and the volume of aqueous liquid should be reduced accordingly to ensure a liquid level height of 10 mm. The height of the cylinder is 50 mm, and the part for contacting the specimen should be smooth and sufficiently rounded, so that any damage to the specimen by the edge of the cylinder can be avoided. In order to prevent aqueous liquid leakage, an elastic but non-absorbent rubber pad or washer should be applied to the cover and the flat base of the flipped cylinder. The metal pressure

roller should have a width of (200 ± 0.5) mm, a mass of (10 ± 0.5) kg, and a smooth surface.

10 pieces specimens (each 5 pieces for testing front and back surfaces) are cut from the processes paper, as squares with side length (125±5) mm or circles with a diameter 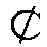 of (125 ± 5) mm. For instruments with small testing areas, the size of the specimen should be slightly larger than the outer diameter of the cylinder to avoid any leakage due to too small specimen. On the other hand, too large should be avoided so as to prevent interference with operation.

Before placing the specimen, it should be ensured that both the internal surface of the cylinder and the rubber pad to be in contact with the specimen are dry, and any contact of hands with the testing area should be avoided. 100mL of water is added into the cylinder via measuring cylinder. A weighted specimen is placed on the circular surface of the cylinder with testing surface facing down and covered with press cover and clamped tightly to secure it with the cylinder.

The cylinder is turned upside down 180° and meanwhile turning on a stopwatch to count 60 seconds for water absorption. 10 to 15 seconds before the end of the water absorption time, the cylinder is turned back, the clamping device for press cover is released, and the specimen is recovered. Note that test water should be replaced after every 5 tests with a new one, to avoid any potential adverse effects on results. At the moment when the specified water absorption time elapses, the specimen that has been removed from the cylinder is placed on a blotting paper spread in advance, with the water absorption surface facing down, covered on its top by another sheet of blotting paper, and immediately rolled by a metal roller forth and back once over 4 seconds without any further applied pressure, to absorb any remaining water on the surface of the specimen. The specimen is taken out quickly, and folded with the water absorption surface inside, and then folded once more and weighted to the accuracy of 0.001g. For specimens of thick cardboard that may not be easily folded, the second weighing should be carried out as soon as possible.
Cobb value is calculated by the formulae: C= (g2-g1) /F
Wherein: C refers to cobb value;
g2-specimen weight after water absorption;
g1-specimen weight before water absorption;
F-100cm² testing area;

### (2) Hot-water resistant test

This test directly evaluates the hot-water resistant ability of paper. The testing method is relatively simple and generally comprises making the treated paper into a container that can hold liquid, pouring 100°C boiling water into the container, and observing for 30 minutes for any permeation and/or leakage. If there is no leakage, it is considered as passing. This method is suitable for mold pulp products.

### Stone treating and testing methods:

The natural stones that can be treated include marbles, granites, sandstones, slates, etc.

Taking sandstones as an example, a sample of sandstone is soaked in a liquid that is obtained by diluting the treatment agent of the present invention with water to a concentration of 3%, removed from the soaking liquid, dried in air for 48 hours at a temperature not lower than 25°C, and then dropped thereon with salad oil, mustard sauce, coffee, vinegar, and the like to observe the permeation state. No permeation means better barrier performance.
Score 5 represents no surface discoloration;
Score4 represents slight surface discoloration;
Score 3 represents surface discoloration and slight permeation;
Score 2 represents severe permeation.

### Example 1

Into a 500 ml four-necked flask equipped with a reflux condenser, a nitrogen inlet tube, a thermometer, and a stirrer were added 80 g CH₂=C(CH₃)C(O)-O-(CH₂)₃[Si(CH₃)₂O]n-Si(CH₃)₂C₄H₉ (having a molecular weight of 500, hereafter referred to as Si-5), 20 g dimethylaminoethyl methacrylate CH₂=C(CH₃)C(O)-O-CH₂CH₂N(CH₃)₂ (hereafter referred to as DM), 100 g methyl ethyl ketone (hereafter referred to as MEK). The reaction was flushed with nitrogen gas for 30 minutes, slowly heated up to a temperature of 50-60°C, added with 1.4 g peroxide initiator tertbutyl peroxypivalate in portions, and then allowed to react at 60°C for 20 hours to yield about 200 g polymer A solution having a solid content of about 50%. The solution was tested using a gas chromatography-mass spectrometry (GC-Mass) to find that the mass concentration of each residual monomer was below 0.1%, indicating that the monomeric composition of the polymer obtained was substantially identical to the composition of the added monomers.

The polymer A solution was added with 295 g water and 5.8 g glacial acetic acid, stirred at 70°C for more than 1 hour, and then subjected to distillation under a reduced pressure to remove the MEK in the polymer A solution, to obtain an aqueous dispersion with 25% solid content.

### Examples 2 to 4

Examples 2 to 4 were performed with a process substantially identical to that of Example 1, except that monomers I CH₂=C(CH₃)C(O)-O-(CH₂)₃[Si(CH₃)₂O]n-Si(CH₃)₂C₄H₉ with different molecular weights, hereafter respectively referred to as Si-10 (having a molecular weight of 1000), Si-20 (having a molecular weight of 2000), Si-30 (having a molecular weight of 3000) were used. Each of the resultant polymer solutions of Examples 2 to 4 was tested using a gas chromatography-mass spectrometry (GC-Mass) to find that the mass concentration of each residual monomer were below 0.1%, indicating that the monomeric composition of the polymer obtained was substantially identical to the composition of the added monomers.

Performance testing of Examples 1-4 were respectively conducted in the following three manners:
(1) surface coating treatment: 10 sheets of white cardboard weighing 230 g /m² are respectively coated with a starch solution (at a 20% concentration) plus a copolymer treatment agent (5%) at surfaces, and then tested for oil repellency by TAPPI rating and water repellency according to Cobb value;
(2) surface sizing treatment: 10 sheets of cardboard weighing 50 g /m² are respectively sized with starch (6%) plus a copolymer treatment agent (5%) at surfaces, and then tested for oil repellency by TAPPI rating and water repellency according to Cobb value;
(3) wet end treatment: a pulp solution (containing 1wt% dried pulp board) are added with 2% (based on parts by weight of dried pulp board) of an alkyl ketene dimer (AKD) sizing agent and 10% (based on parts by weight of dried pulp board) of a treatment agent) and then manufactured into 10-inch discs weighting 20 g. The discs are tested with salad oil at 85°C for 20 minutes and rated according to permeation performance; or tested with boiling water at 100°C for 30 minutes and evaluated as pass or leakage. The performances are summarized in the following Table 4.

**Table 4 Test Performance Comparison Table**

| | Example 1 | Example 2 | Example 3 | Example 4 |
|---|---|---|---|---|
| Si | Si-5 | Si-10 | Si-20 | Si-30 |
| 230 g cardboard | 5% | 5% | 5% | 5% |
| Kit | 2 | 2 | 2 | 1 |
| Cobb(g/100cm²) | 20 | 19 | 22 | 25 |
| 50 g thin paper | 5% | 5% | 5% | 5% |
| Kit | 2 | 2 | 2 | 1 |
| Cobb(g/100cm²) | 20 | 19 | 22 | 25 |
| 10-inch disc | 10% | 10% | 10% | 10% |
| 85°C salad oil | 5 | 5 | 4 | 2 |
| 100°C boiling water | pass | pass | pass | pass |

### Examples 5-8

Examples 5-8 were performed with a process substantially identical to that of Example 1, except that the contents of monomer I vary from 30% to 80% and the contents of amino-containing monomer II were correspondingly adjusted. Each of the resultant polymer solution was tested using a gas chromatography-mass spectrometry (GC-Mass), to find that the mass concentration of each residual monomer was below 0.1%, indicating that the monomeric composition of the polymer obtained was substantially identical to the composition of the added monomers. Performance testing was the same as that in Example 1, and the results were summarized in the following Table 5.

**Table 5 Test Performance Comparison Table**

| | Example 1 | Example 5 | Example 6 | Example 7 | Example 8 |
|---|---|---|---|---|---|
| Si-5 | 80% | 60% | 50% | 40% | 30% |
| DM | 20% | 40% | 50% | 60% | 70% |
| 230 g cardboard | 5% | 5% | 5% | 5% | 5% |
| Kit | 2 | 2 | 1 | 1 | 0 |
| Cobb(g/100c m²) | 20 | 21 | 23 | 26 | 30 |
| 50 g thin paper | 5% | 5% | 5% | 5% | 5% |
| Kit | 2 | 2 | 1 | 1 | 0 |
| Cobb(g/100c m²) | 20 | 21 | 23 | 26 | 30 |
| 10-inch disc | 10% | 10% | 10% | 10% | 10% |
| 85°C salad oil | 5 | 4 | 3 | 2 | 2 |
| 100°C boiling water | passing | passing | passing | Leakage | leakage |

### Examples 9-13

Examples 9-13 were performed with a process substantially identical to that of Example 1, except that different kinds of monomer I were used. Each of the resultant polymer solution was tested using a gas chromatography-mass spectrometry (GC-Mass) to find that the mass concentration of each residual monomer was below 0.1%, indicating that the monomeric composition of the polymer obtained was substantially identical to the composition of the added monomers.

The monomer I used in Example 9 had a structure of CH₂=C(CH₃)C(O)-O-(CH₂)₃[Si(CH₃)₂O]n-Si(CH₃)₃ (having a molecular weight of 500), hereafter referred to as Si-5Me.

The monomer I used in Example 10 had a structure of CH₂=C(CH₃)C(O)-O-(CH₂)₃[Si(CH₃)₂O]n-Si(CH₃)₂C₈H₁₇ (having a molecular weight of 500), hereafter referred to as Si-5Oct.

The monomer I used in Example 11 had a structure of CH₂=C(CH₃)C(O)-(NH)-(CH₂)₃[Si(CH₃)₂O]n-Si(CH₃)₂C₄H₉ (having a molecular weight of 500), hereafter referred to as Si-5Bu(N).

The monomer I used in Example 12 has a structure of: CH₂=C(CH₃)C(O)-O-(CH₂)₃Si(CH₃)[(Si(CH₃)₂O]n-Si(CH₃)₂C₄H₉]₂ (having a molecular weight of 500), hereafter referred to as Si-5-2Bu.

The monomer I used in Example 13 had a structure of: CH₂=C(CH₃)C(O)-O-(CH₂)₃Si(CH₃)[(Si(CH₃)₂O]n-Si(CH₃)₂(CH₂)₃OCH₃]₂ (having a molecular weight of 500), hereafter referred to as Si-5-2OMe.

Performance testing was the same as those in Example 1, and the results were summarized in the following Table 6.

**Table 6 Test Performance Comparison Table**

| | Example 1 | Example 9 | Example 10 | Example 11 | Example 12 | Example 13 |
|---|---|---|---|---|---|---|
| 230 g cardboard | 5% | 5% | 5% | 5% | 5% | 5% |
| Kit | 2 | 2 | 2 | 2 | 2 | 2 |
| Cobb(g/100c m²) | 20 | 20 | 21 | 22 | 24 | 25 |
| 50 g/m² thin paper sheet | 5% | 5% | 5% | 5% | 5% | 5% |
| Kit | 2 | 2 | 3 | 2 | 2 | 2 |
| Cobb (g/100cm²) | 20 | 21 | 19 | 19 | 24 | 25 |
| 10-inch disc | 10% | 10% | 10% | 10% | 10% | 10% |
| 85°C salad oil | 5 | 5 | 5 | 5 | 5 | 4 |
| 100°C boiling water | Pass | Pass | Pass | Pass | Pass | Pass |

### Example 14

Into a 500ml four-necked flask equipped with a reflux condenser, a nitrogen inlet tube, a thermometer, and a stirrer were added 80 g CH₂=C(CH₃)C(O)-O-(CH₂)₃[Si(CH₃)₂O]n-Si(CH₃)₂C₄H₉ (having a molecular weight of 500) (hereafter referred to as Si-5), 20 g N-[3-(dimethylamino)propyl]-2-methyl-2-acrylamide CH₂=C(CH₃)C(O)-NH-CH₂CH₂CH₂N(CH₃)₂ (hereafter referred to as DN) and 100 g methyl ethyl ketone (hereafter referred to as MEK). The reaction was flushed with nitrogen gas for 30 minutes, slowly heated up to a temperature of 50-60°C, added with 1.4 g peroxide initiator tertbutyl peroxypivalate in portions, and allowed to react at 60°C for 20 hours to yield about 200 g polymer A solution having a solid content of about 50%. The resultant polymer solution was tested using a gas chromatography-mass spectrometry (GC-Mass) to find that the mass concentration of each residual monomer is below 0.1%, indicating that the monomeric composition of the polymer obtained was substantially identical to the composition of the added monomers.

The polymer A solution was added with 295 g water and 5.8 g glacial acetic acid, stirred at 70°C for more than 1 hour, and then subjected to distillation under a reduced pressure to remove the MEK in the polymer A solution, to obtain an aqueous dispersion with 25% solid content.

### Example 15

Into a 500ml four-necked flask equipped with a reflux condenser, a nitrogen inlet tube, a thermometer, and a stirrer are added 80 g CH₂=C(CH₃)C(O)-O-(CH₂)₃[Si(CH₃)₂O]n-Si(CH₃)₂C₄H₉ (having a molecular weight of 500) (hereafter referred to as Si-5), 20 g N-[3(dimethylamino)propyl]-2-methyl-2-acrylamide CH₂=C(CH₃)C(O)-NH-CH₂CH₂CH₂N(CH₃)₂ (hereafter referred to as DN) and 100 g methyl ethyl ketone (hereafter referred to as MEK). The reaction is flushed with nitrogen gas for 30 minutes, slowly heated up to a temperature of 50-60°C, added with 1.4 g peroxide initiator tertbutyl peroxypivalate in portions, and allowed to react at 60°C for 20 hours to yield about 200 g polymer A solution having a solid content of about 50%. The resultant polymer solution was tested using a gas chromatography-mass spectrometry (GC-Mass) to find that the mass concentration of each residual monomer was below 0.1%, indicating that the monomeric composition of the polymer obtained is substantially identical to the composition of the added monomers.

The polymer A solution was added with 244 g water and 5.8 g glacial acetic acid, stirred at 70°C for more than 1 hour, subjected to distillation under a reduced pressure to remove the MEK in the polymer A solution, and then added with 50 g 1% hydrogen peroxide (H₂O₂) and kept at that temperature for more than 1 hour. The solution was cooled down to obtain an aqueous dispersion with 25% solid content.

### Example 16

Into a 500ml four-necked flask equipped with a reflux condenser, a nitrogen inlet tube, a thermometer, and a stirrer were added 80 g CH₂=C(CH₃)C(O)-O-(CH₂)₃[Si(CH₃)₂O]n-Si(CH₃)₂C₄H₉ (having a molecular weight of 500) (hereafter referred to as Si-5), 20 g N-[3(dimethylamino)propyl]-2-methyl-2-acrylamide CH₂=C(CH₃)C(O)-NH-CH₂CH₂CH₂N(CH₃)₂ (hereafter referred to as DN) and 100 g methyl ethyl ketone (hereafter referred to as MEK). The reaction was flushed with nitrogen gas for 30 minutes, slowly heated up to a temperature of 50-60°C, added with 1.4 g peroxide initiator tertbutyl peroxypivalate in portions, and allowed to react at 60°C for 20 hours to yield about 200 g polymer A solution having a solid content of about 50%. The resultant polymer solution was tested using a gas chromatography-mass spectrometry (GC-Mass) to find that the mass concentration of each residual monomer is below 0.1%, indicating that the monomeric composition of the polymer obtained was substantially identical to the composition of the added monomers.

The polymer A solution was added with 270 g water and 5.8 g glacial acetic acid, stirred at 70°C for more than 1 hour, subjected to distillation under a reduced pressure to remove the MEK in the polymer A solution, and then added with 25 g 1% hydrogen peroxide (H₂O₂) and kept at that temperature for more than 1 hour. The solution was cooled down to obtain an aqueous dispersion with 25% solid content.

Performance test of Examples 14-16 were the same as that in Example 1, and the results were summarized in the following Table 7.

**Table 7 Test Performance Comparison Table**

| | Example 1 | Example 14 | Example 15 | Example 16 |
|---|---|---|---|---|
| DM | 20 | | | |
| DN | | 20 | 20 | 20 |
| Treatment by hydrogen peroxide | no | no | 50 | 25 |
| 230 g cardboard | 5% | 5% | 5% | 5% |
| Kit | 2 | 2 | 1 | 2 |
| Cobb (g/100cm²) | 20 | 20 | 25 | 22 |
| 50 g/m² thin paper sheet | 5% | 5% | 5% | 5% |
| Kit | 2 | 2 | 1 | 2 |
| Cobb(g/100cm²) | 20 | 20 | 22 | 22 |
| **10-inch disc** | 10% | 10% | 10% | 10% |
| 85°C salad oil | 5 | 5 | 4 | 5 |
| 100°C boiling water | Pass | Pass | Pass | Pass |

### Example 17

Into a 500 ml four-necked flask equipped with a reflux condenser, a nitrogen inlet tube, a thermometer, and a stirrer were added 77 g CH₂=C(CH₃)C(O)-O-(CH₂)₃[Si(CH₃)₂O]n-Si(CH₃)₂C₄H₉ (having a molecular weight of 500, hereafter referred to as Si-5), 15 g methacrylate dimethylaminoethyl ester CH₂=C(CH₃)C(O)-O-CH₂CH₂N(CH₃)₂ (hereafter referred to as DM), 8 g hydroxyethyl methacrylate CH₂=C(CH₃)-C(O)-O-CH₂CH₂OH (hereafter referred to as HEMA) and 100 g methyl ethyl ketone (hereafter referred to as MEK). The reaction was flushed with nitrogen gas for 30 minutes, slowly heated up to a temperature of 50-60°C, added with 1.4 g peroxide initiator tertbutyl peroxypivalate in portions, and allowed to react at 60°C for 20 hours to yield about 200 g polymer A solution having a solid content of about 50%. The resultant polymer solution was tested using a gas chromatography-mass spectrometry (GC-Mass) to find that the mass concentration of each residual monomer was below 0.1% and, particularly, the mass concentration of residual HEMA was below 0.05%, indicating that the monomeric composition of the polymer obtained was substantially identical to the composition of the added monomers.

The polymer A solution was added with 295 g water and 5.8 g glacial acetic acid, stirred at 70°C for more than 1 hour, and then subjected to distillation under a reduced pressure to remove the MEK in the polymer A solution, to obtain an aqueous dispersion with 25% solid content.

### Examples 18-20

Examples 18-20 were performed with a process substantially identical to that of Example 17 except that different kinds of monomer I CH₂=C(CH₃)C(O)-O-(CH₂)₃[Si(CH₃)₂O]n-Si(CH₃)₂C₄H₉, hereafter respectively referred to as Si-10 (having a molecular weight of 1000), Si-20 (having a molecular weight of 2000), Si-30 (having a molecular weight of 3000) were used. The resultant polymer solution was tested using a gas chromatography-mass spectrometry (GC-Mass) to find that the mass concentration of each residual monomer is below 0.1% and, particularly, the mass concentration of residual HEMA was below 0.05%, indicating that the monomeric composition of the polymer obtained was substantially identical to the composition of the added monomers.

Performance test of Examples 17-20 were respectively conducted as follows:
1) test on textiles: 100% polyester cloth and 100% cotton cloth are respectively treated with a treatment agent that is diluted to a 3% liquid, subjected to padding treatment, and subjected to water repellency, spray test, and oil repellency;
2) test on paper sheet: two kinds of paper sheets are respectively treated, i.e., 230 g /m² cardboard by means of surface coating treatment at a treatment agent concentration of 5%; and 50 g/m² thin paper sheet by means of surface sizing at a treatment agent concentration of 5%, and then then tested for oil repellency by TAPPI rating and water repellency according to Cobb value;
3) test on mold pulp: a 1% pulp solution are added with 2% AKD sizing agent and 10% treatment agent and then manufactured into 10-inch discs weighting 20 g. The discs are tested with salad oil at 80°C for 20 minutes and rated according to permeation performance; or tested with boiling water at 100°C for 30 minutes and evaluated as passing or leaking.
4) test on sandstone: a sandstone sample is soaked with the treatment agent of the present invention that is diluted with water to a concentration of 3%, dried in air for 48 hours at a temperature not lower than 25°C, and then dropped thereon with salad oil, mustard sauce, and coffee to observe the wetting performance, and accordingly rated by score.

The performances are summarized in the following Table 8:

**Table 8 Test Performance Comparison Table**

| | Example 17 | Example 18 | Example 19 | Example 20 |
|---|---|---|---|---|
| Si | Si-5 | Si-10 | Si-20 | Si-30 |
| Polyester cloth, water repellency | 3 | 3 | 3 | 2 |
| Polyester cloth, spray test | 90 | 90 | 90 | 80 |
| Polyester cloth, oil repellency | 2 | 2 | 2 | 1 |
| Cotton cloth, water repellency | 3 | 3 | 3 | 2 |
| Cotton cloth, spray test | 90 | 90 | 90 | 80 |
| Cotton cloth, oil repellency | 2 | 2 | 2 | 1 |
| 230 g paper, oil repellency | 2 | 2 | 2 | 1 |
| 230 g paper, Cobb | 20 | 19 | 22 | 25 |
| 50 g paper, oil repellency | 2 | 2 | 2 | 1 |
| 50 g paper, Cobb | 20 | 19 | 22 | 25 |
| Disc, hot-oil test | 5 | 5 | 4 | 2 |
| Disc, boiling water test | Pass | Pass | Pass | Pass |
| Sandstone, salad oil | 5 | 5 | 4 | 3 |
| Sandstone, mustard sauce | 5 | 5 | 3 | 2 |
| Sandstone, soy sauce | 5 | 5 | 4 | 2 |
| Sandstone, coffee | 5 | 5 | 5 | 5 |

### Examples 21-24

Examples 21-24 were performed with a process substantially identical to that of Example 17, except that the contents of monomer I vary from 30% to 80% and the contents of amino-containing monomer II were correspondingly adjusted. In each example, the resultant polymer solution was tested using a gas chromatography-mass spectrometry (GC-Mass) to find that the mass concentration of each residual monomer was below 0.1% and, particularly, the mass concentration of residual HEMA is below 0.05%, indicating that the monomeric composition of the polymer obtained was substantially identical to the composition of the added monomers. Performance test was the same as that in Example 17 and the results were summarized in the following Table 9:

**Table 9 Test Performance Comparison Table**

| | Example 17 | Example 21 | Example 22 | Example 23 | Example 24 |
|---|---|---|---|---|---|
| Si-5 | 77% | 60% | 50% | 39% | 27% |
| DM | 15% | 32% | 42% | 53% | 65% |
| HEMA | 8% | 8% | 8% | 8% | 8% |
| Polyester cloth, water repellency | 3 | 3 | 2 | 2 | 1 |
| Polyester cloth, spray test | 90 | 90 | 90 | 80 | 70 |
| Cotton cloth, water repellency | 3 | 2 | 2 | 1 | 1 |
| Cotton cloth, spray test | 90 | 90 | 80 | 80 | 70 |
| 230 g paper, Cobb | 20 | 21 | 23 | 26 | 30 |
| 50 g paper, Cobb | 20 | 21 | 23 | 26 | 30 |
| Disc, hot-oil test | 5 | 4 | 3 | 2 | 2 |
| Sandstone, salad oil | 5 | 4 | 2 | 2 | 2 |
| Sandstone, mustard sauce | 5 | 4 | 3 | 2 | 2 |
| Sandstone, soy sauce | 5 | 4 | 3 | 2 | 2 |
| Sandstone, coffee | 5 | 5 | 3 | 2 | 2 |

### Examples 25-29

Examples 25-29 were performed with a process substantially identical to that of Example 17, except that monomers I with different structures were used. In each example, the resultant polymer solution was tested using a gas chromatography-mass spectrometry (GC-Mass) to find that the mass concentration of each residual monomer was below 0.1% and, particularly, the mass concentration of residual HEMA was below 0.05%, indicating that the monomeric composition of the polymer obtained was substantially identical to the composition of the added monomers.

The monomer I used in Example 25 had a structure of CH₂=C(CH₃)C(O)-O-(CH₂)₃[Si(CH₃)₂O]n-Si(CH₃)₃ (having a molecular weight of 500), hereafter referred to as Si-5Me.

The monomer I used in Example 26 had a structure of CH₂=C(CH₃)C(O)-O-(CH₂)₃[Si(CH₃)₂O]n-Si(CH₃)₂C₈H₁₇ (having a molecular weight of 500), hereafter referred to as Si-5Oct.

The monomer I used in Example 27 had a structure of CH₂=C(CH₃)C(O)-(NH)-(CH₂)₃[Si(CH₃)₂O]n-Si(CH₃)₂C₄H₉ (having a molecular weight of 500), hereafter referred to as Si-5Bu(N).

The monomer I used in Example 28 had a structure of CH₂=C(CH₃)C(O)-O-(CH₂)₃Si(CH₃)[(Si(CH₃)₂O]n-Si(CH₃)₂C₄H₉]₂ (having a molecular weight of 500), hereafter referred to as Si-5-2Bu.

The monomer I used in Example 29 had a structure of: CH₂=C(CH₃)C(O)-O-(CH₂)₃Si(CH₃)[(Si(CH₃)₂O]n-Si(CH₃)₂(CH₂)₃OCH₃]₂ (having a molecular weight of 500), hereafter referred to as Si-5-2OMe.

Performance tests were the same as that in Example 17 and the results were summarized in the following Table 10:

**Table 10 Test Performance Comparison Table**

| | Example 17 | Example 25 | Example 26 | Example 27 | Example 28 | Example 29 |
|---|---|---|---|---|---|---|
| Polyester cloth, water repellency | 3 | 3 | 3 | 3 | 3 | 2 |
| Polyester cloth, spray test | 90 | 90 | 90 | 90 | 80 | 80 |
| Polyester cloth, oil repellency | 2 | 2 | 2 | 2 | 2 | 2 |
| Cotton cloth, water repellency | 2 | 2 | 3 | 2 | 2 | 1 |
| Cotton cloth, spray test | 90 | 90 | 90 | 90 | 90 | 80 |
| Cotton cloth, oil repellency | 2 | 2 | 2 | 2 | 2 | 1 |
| 230 g paper, oil repellency | 2 | 2 | 2 | 2 | 2 | 1 |
| 230 g paper, Cobb | 20 | 20 | 21 | 22 | 24 | 25 |
| 50 g paper, oil repellency | 2 | 2 | 3 | 2 | 2 | 1 |
| 50 g paper, Cobb | 20 | 21 | 19 | 19 | 23 | 25 |
| Disc, hot-oil test | 5 | 5 | 5 | 5 | 5 | 4 |
| Disc, boiling water test | Pass | Pass | Pass | Pass | Pass | Pass |
| Sandstone, salad oil | 5 | 3 | 5 | 5 | 3 | 3 |
| Sandstone, mustard sauce | 5 | 4 | 5 | 5 | 3 | 2 |
| Sandstone, soy sauce | 5 | 3 | 5 | 5 | 4 | 3 |
| Sandstone, coffee | 5 | 3 | 5 | 5 | 5 | 4 |

### Examples 30-33

Examples 30-33 were performed with a process substantially identical to that of Example 17, except that different functional monomers vinyl pyrrolidone(NVP), 2-butanone oxime adduct of 2-isocyanato ethyl acrylate (ANCO), methacrylic acid (MAA), glycidyl methacrylate (AGE) were used to replace HEMA. In each example, the polymer solution was tested using a gas chromatography-mass spectrometry (GC-Mass) to find that the mass concentration of each residual monomer was below 0.1% and, particularly, the mass concentrations of residual NVP, ANCO, MAA, AGE monomers were all below 0.05%, indicating that the monomeric composition of the polymer obtained was substantially identical to the composition of the added monomers.

Performance tests were the same as that in Example 17 and the results were summarized in the following Table 11:

**Table 11 Test Performance Comparison Table**

| | Example 17 | Example 30 | Example 30 | Example 32 | Example 33 |
|---|---|---|---|---|---|
| Functional monomer | HEMA | NVP | ANCO | MAA | AGE |
| Polyester cloth, water repellency | 3 | 3 | 2 | 2 | 2 |
| Polyester cloth, spray test | 90 | 90 | 80 | 90 | 80 |
| Polyester cloth, oil repellency | 2 | 2 | 2 | 2 | 2 |
| Cotton cloth, water repellency | 2 | 2 | 2 | 2 | 2 |
| Cotton cloth, spray test | 90 | 90 | 80 | 90 | 80 |
| Cotton cloth, oil repellency | 2 | 2 | 2 | 2 | 2 |
| 230 g paper, oil repellency | 2 | 2 | 1 | 2 | 2 |
| 230 g paper, Cobb | 20 | 23 | 25 | 23 | 22 |
| 50 g paper, oil repellency | 2 | 2 | 1 | 2 | 2 |
| 50 g paper, Cobb | 20 | 23 | 25 | 23 | 25 |
| Disc, hot-oil test | 5 | 5 | 5 | 5 | 5 |
| Sandstone, salad oil | 5 | 5 | 5 | 5 | 4 |
| Sandstone, mustard sauce | 5 | 5 | 5 | 5 | 5 |
| Sandstone, soy sauce | 5 | 5 | 5 | 5 | 4 |
| Sandstone, coffee | 5 | 5 | 4 | 5 | 5 |

### Example 34

Into a 500ml four-necked flask equipped with a reflux condenser, a nitrogen inlet tube, a thermometer, and a stirrer were added 77 g CH₂=C(CH₃)C(O)-O-(CH₂)₃[Si(CH₃)₂O]n-Si(CH₃)₂C₄H₉ (having a molecular weight of 500) (hereafter referred to as Si-5), 15 g N-[3-(dimethylamino)propyl]-2-methyl-2-acrylamide CH₂=C(CH₃)C(O)-NH-CH₂CH₂CH₂N(CH₃)₂ (hereafter referred to as DN), 8 g hydroxyethyl methacrylate CH₂=C(CH₃)-C(O)-O-CH₂CH₂OH (hereafter referred to as HEMA) and 100 g methyl ethyl ketone (hereafter referred to as MEK). The reaction was flushed with nitrogen gas for 30 minutes, slowly heated up to a temperature of 50-60°C, added with 1.4 g peroxide initiator tertbutyl peroxypivalate in portions, and allowed to react at 60°C for 20 hours to yield about 200 g polymer A solution having a solid content of about 50%. The resultant polymer solution was tested using a gas chromatography-mass spectrometry to find that the mass concentration of each residual monomer was below 0.1% and, particularly, the mass concentration of residual HEMA as below 0.05%, indicating that the monomeric composition of the polymer obtained was substantially identical to the composition of the added monomers.

The polymer A solution was added with 295 g water and 5.8 g glacial acetic acid, stirred at 70°C for more than 1 hour, and then subjected to distillation under a reduced pressure to remove the MEK in the polymer A solution, to obtain an aqueous dispersion with 25% solid content.

### Examples 35-38

Examples 35-38 were performed with a process substantially identical to that of Example 34, except that different functional monomers vinyl pyrrolidone(NVP), 2-butanone oxime adduct of 2-isocyanato ethyl acrylate (ANCO), methacrylate (MAA), glycidyl methacrylate (AGE), were used to replace HEMA. The polymer solution was tested using a gas chromatography-mass spectrometry (GC-Mass) to find that the mass concentration of each residual monomer was below 0.1% and, particularly, the mass concentrations of residual NVP, ANCO, MAA, AGE monomers were all below 0.05%, indicating that the monomeric composition of the polymer obtained was substantially identical to the composition of the added monomers.

The aqueous dispersion resulted from Example 14 and Examples 34-38 were used as the treatment agent and tested on several types of articles:
1) testing on fabrics: 100% polyester cloth and 100% cotton cloth are respectively treated with the treatment agent that is diluted to 3% or 2.4% liquid, subjected to immersion rolling treatment, and tested for water repellency, spray test, and oil repellency;
2) testing on paper sheet: two kinds of paper sheets are respectively treated, i.e., 230 g /m² cardboard by means of surface coating treatment at a treatment agent concentration of 5% or 4%; and 50 g/m² thin paper sheet by means of surface sizing at a treatment agent concentration of 5% or 4%, and then then tested for oil repellency by TAPPI rating and water repellency according to Cobb water absorption value;
3) testing on mold pulp: a 1% pulp solution are added with 2% AKD sizing agent and 10% or 8% treatment agent and then manufactured into 10-inch discs weighting 20 g. The discs are tested with salad oil at 80°C for 20 minutes and rated according to permeation performance; or tested with boiling water at 100°C for 30 minutes and evaluated as passing or leaking.
4) testing on sandstone: a sandstone sample is soaked with the treatment agent of the present invention that is diluted with water to a concentration of 3% or 2.4%, dried in air for 48 hours at a temperature not lower than 25°C, and then dropped thereon with salad oil, mustard sauce, and coffee to observe the wetting performance, and accordingly rated by score.

The performances are summarized in the following Table 12:

**Table 12 Test Performance Comparison Table**

| | Example 14 | Example 34 | Example 35 | Example 36 | Example 37 | Example 38 |
|---|---|---|---|---|---|---|
| Functional monomer | ----- | HEMA | NVP | ANCO | MAA | AGE |
| Polyester cloth, water repellency, 3% | 2 | 3 | 3 | 2 | 2 | 2 |
| Polyester cloth, water repellency, 2.4% | 2 | 2 | 2 | 2 | 2 | 2 |
| Polyester cloth, spray test, 3% | 80 | 90 | 90 | 80 | 90 | 80 |
| Polyester cloth, spray test, 2.4% | 70 | 80 | 80 | 80 | 80 | 70 |
| Polyester cloth, oil repellency, 3% | 2 | 2 | 2 | 2 | 2 | 2 |
| Polyester cloth, oil repellency, 2.4% | 1 | 2 | 2 | 2 | 2 | 2 |
| Cotton cloth, water repellency, 3% | 2 | 2 | 2 | 2 | 2 | 2 |
| Cotton cloth, water repellency, 2.4% | 2 | 2 | 2 | 2 | 2 | 2 |
| Cotton cloth, spray test, 3% | 80 | 90 | 90 | 80 | 90 | 80 |
| Cotton cloth, spray test 2.4% | 70 | 80 | 80 | 80 | 80 | 70 |
| Cotton cloth, oil repellency, 3% | 2 | 2 | 2 | 2 | 2 | 2 |
| Cotton cloth, oil repellency, 2.4% | 1 | 2 | 2 | 2 | 2 | 2 |
| 230 g paper, oil repellency, 5% | 2 | 2 | 2 | 2 | 2 | 2 |
| 230 g paper, oil repellency, 4% | 1 | 2 | 2 | 2 | 2 | 2 |
| 230 g paper, Cobb, 5% | 20 | 20 | 22 | 23 | 22 | 22 |
| 230 g paper, Cobb, 4% | 26 | 21 | 24 | 25 | 25 | 26 |
| 50 g paper, oil repellency, 5% | 2 | 2 | 2 | 2 | 2 | 2 |
| 50 g paper, oil repellency, 4% | 1 | 2 | 2 | 1 | 2 | 2 |
| 50 g paper, Cobb, 5% | 20 | 20 | 21 | 24 | 23 | 24 |
| 50 g paper, Cobb, 4% | 26 | 21 | 24 | 26 | 25 | 26 |
| Disc, hot-oil test, 10% | 5 | 5 | 5 | 5 | 5 | 5 |
| Disc, hot-oil test, 8% | 3 | 4 | 4 | 4 | 4 | 4 |
| Sandstone, salad oil, 3% | 4 | 5 | 5 | 5 | 5 | 4 |
| Sandstone, salad oil, 2.4% | 3 | 4 | 4 | 4 | 4 | 4 |
| Sandstone, mustard sauce, 3% | 4 | 4 | 5 | 5 | 5 | 5 |
| Sandstone, mustard sauce, 2.4% | 4 | 4 | 4 | 4 | 4 | 4 |
| Sandstone, soy sauce, 3% | 4 | 5 | 5 | 5 | 5 | 4 |
| Sandstone, soy sauce, 2.4% | 4 | 4 | 4 | 4 | 4 | 4 |
| Sandstone, coffee, 3% | 4 | 5 | 5 | 4 | 5 | 5 |
| Sandstone, coffee, 2.4% | 4 | 4 | 4 | 4 | 4 | 4 |

Although some exemplary embodiments of the present invention have been illustrated and described, the present invention is not limited to the disclosed embodiments. On the contrary, those skilled in the art will recognize that some modifications and changes may be made to the described embodiments without departing from the spirit and scope of the present invention as described in the attached claims.

## Claims

1. A copolymer comprising a repeating unit derived from monomer I and a repeating unit derived from monomer II, wherein
a) monomer I has the following general formula:
CH₂=C(R₁)-X-Z
wherein, X is selected from groups represented by X-1 and groups represented by X-2,
-C(O)-O-(CH₂)n- X-1
-C(O)-N(R₂)-(CH₂)n- X-2
R₁ and R₂ are selected from hydrogen atom or C₁₋C₂₀ alkyl, n is an integer of 1-20;
Z is selected from the following group: 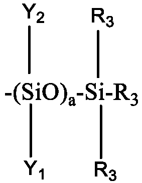
in group Z, R₃, in each occurrence, is independently C₁-C₂₀ alkyl, C₆-C₂₀ aryl, C₁-C₂₀ alkoxy or a group R₄-O-R₅-, wherein R₄ is C₁-C₁₀ alkyl, R₅ is C₁-C₁₀ alkylene, and 1≤a≤200;
Y₁ and Y₂, in each occurrence, are independently C₁₋C₂₀ alkyl or C₆-C₂₀ aryl, or represented by the following group: 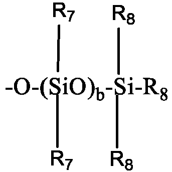
R₇, in each occurrence, is independently C₁-C₂₀ alkyl or C₆-C₂₀ aryl; R₈, in each occurrence, is independently C₁-C₂₀ alkyl, C₆-C₂₀ aryl, C₁-C₂₀ alkoxy or a group R₉-O-R₁₀-, wherein R₉ is C₁-C₁₀ alkyl, R₁₀ is C₁-C₁₀ alkylene, and 0≤b≤200;
b) monomer II has the following general formula:
CH₂=C(R₁)-P-N(R₃R₄)
wherein, P is selected from groups represented by P-1 and groups represented by P-2,
-C(O)-O-(CH₂)n- P-1
-C(O)-N(R₂)-(CH₂)n- P-2
wherein, R₁ and R₂ are selected from hydrogen atom or C₁-C₂₀ alkyl, n is an integer of 1-20; R₃ and R₄, in each occurrence, are independently C₁-C₈ alkyl or benzyl, or alternatively, R₃ and R₄ are jointed and, together with the nitrogen atom, form a morpholino, piperidino, or pyrrolidino group.

2. The copolymer as claimed in claim 1, wherein, the repeating unit derived from monomer I is present in the copolymer in a mass percent of 30-90%, preferably 40-85%, more preferably 50-80%; and/or
the repeating unit derived from monomer II is present in the copolymer in a mass percent of 10-70%, preferably 10-40%, more preferably 15-35%; and/or
the repeating unit derived from monomer II is in the form of ammonium salt or nitrogen oxide.

3. The copolymer as claimed in claim 1 or 2, wherein,
R₁ and R₂ are selected from hydrogen atom or methyl;
in group Z, R₃, in each occurrence, is independently C₁-C₁₀ alkyl, C₆-C₁₀ aryl, C₁-C₁₀ alkoxy or a group R₄-O-R₅-, wherein R₄ is C₁-C₁₀ alkyl, R₅ is C₁-C₁₀ alkylene, and 1≤a≤100; R₇, in each occurrence, is independently C₁-C₁₀ alkyl or C₆-C₁₀ aryl; R₈, in each occurrence, is independently C₁-C₁₀ alkyl, C₆-C₁₀ aryl, C₁-C₁₀ alkoxy or a group R₉-O-R₁₀-, wherein R₉ is C₁-C₁₀ alkyl, R₁₀ is C₁-C₁₀ alkylene, and 0≤b≤100;
in monomer II, R₃ and R₄, in each occurrence, are independently C₁-C₃ alkyl, or alternatively, R₃ and R₄ are jointed and, together with the nitrogen atom, form a morpholino, piperidino, or pyrrolidino group.

4. The copolymer as claimed in any one of claims 1-3, wherein, Z is selected from the following groups: 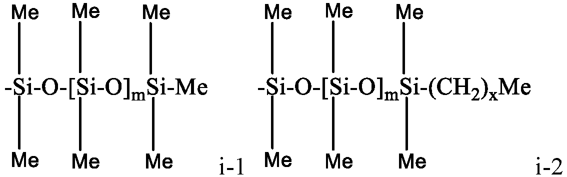 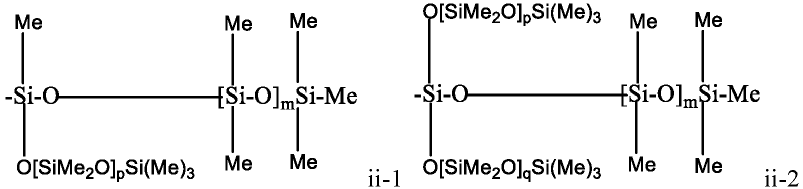 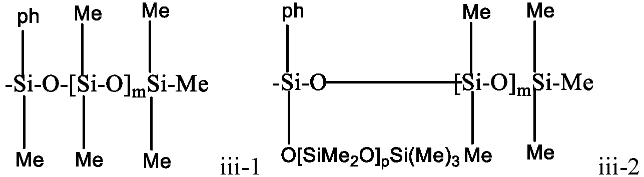 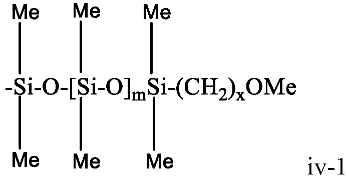 Me represents methyl, ph represents phenyl, 1≤m+1≤200, preferably 1≤m+1≤100; 0≤p≤200, preferably 0≤p≤100; 0≤q≤200, preferably 0≤q≤100; 1≤x≤10.

5. The copolymer as claimed in any one of claims 1-4, wherein,
monomer II is selected from one or more of dimethylaminoethyl (meth)acrylate, dimethylaminopropyl (meth)acrylate, diethylaminoethyl (meth)acrylate, diethylaminopropyl (meth)acrylate, dimethylaminoethyl (meth)acrylamide, diethylaminoethyl (meth)acrylamide, dipropylaminoethyl (meth)acrylamide, dimethylaminopropyl (meth)acrylamide, diethylaminopropyl (meth)acrylamide, dipropylaminopropyl (meth)acrylamide.

6. The copolymer as claimed in any one of claims 1-5, wherein, the copolymer further comprises repeating units derived from other monomers, wherein said other monomer is selected from at least one of monomer III, monomer IV and monomer V, wherein
monomer III has the following general formula:
CH₂=C(R₁)-G-(R₂O)_{q}-R₃
wherein, G is selected from groups represented by G-1 and groups represented by G-2,
-C(O)-O-(CH₂)n- G-1
-C(O)-N(R₄)-(CH₂)n- G-2
in these formulas, R₁ represents hydrogen atom or methyl, R₂ is C₂-C₄ alkylene, wherein alkylene groups with different numbers of carbon atoms may be present in one molecule, q is an integer of 1-50, R₃ represents hydrogen atom or C₁₋C₂₀ alkyl, R₄ represents hydrogen atom or methyl, n is an integer of 0-10;
monomer IV is a monomer having an anionic group and a polymerizable unsaturated group, wherein the anionic group is a carboxylic or a sulfonic group;
monomer V is selected from a monomer having a pyrrolidone structure and a polymerizable unsaturated group, a monomer having a blocked isocyanate group and a polymerizable unsaturated group, a monomer having an alkoxysilyl group and a polymerizable unsaturated group or a monomer having a glycidyl group and a polymerizable unsaturated group.

7. The copolymer as claimed in claim 6, wherein,
the repeating unit derived from monomer I is present in the copolymer in a mass percent of 30-90%, preferably 40-85%, more preferably 50-80%; the repeating unit derived from monomer II is present in the copolymer in a mass percent of 5-65%, preferably 10-40%, more preferably 15-35%; and the repeating unit derived from the other monomers is present in the copolymer in a mass percent of 1-30%.

8. The copolymer as claimed in claim 6 or 7, wherein, monomer III is selected from one or multiple combination of 2-hydroxyethyl (meth)acrylate, 2-hydroxypropyl (meth)acrylate, 2-hydroxybutyl (meth)acrylate, 4-hydroxybutyl (meth)acrylate, polyethylene glycol mono(meth)acrylate, polypropylene glycol mono(meth)acrylate, and methoxypolyethylene glycol (meth)acrylate;
monomer IV is selected from (meth)acrylic acid, butenoic acid, maleic acid, fumaric acid, itaconic acid, citraconic acid, vinyl sulfonic acid, (methyl) allyl sulfonic acid, styrene sulfonic acid, vinyl benzene sulfonic acid, acrylamido tertbutyl sulfonic acid or salts thereof;
monomer V is a monomer having pyrrolidone structure and polymerizable unsaturated group, a monomer having a blocked isocyanate group and a polymerizable unsaturated group, a monomer having an alkoxysilyl group and a polymerizable unsaturated group or a monomer having a glycidyl group and a polymerizable unsaturated group;
the repeating units derived from monomers III, IV and V are present in a mass percent of 1-30%.

9. A treatment agent comprising the copolymer of any one of claims 1-8 and a solvent, wherein the solvent includes water and/or an organic solvent,
preferably, the organic solvent is one or more of acetone, methyl ethyl ketone, 4-methyl-2-pentanone, ethyl acetate, butyl acetate, N-methyl-2-pyrrolidone, N,N-dimethyl formamide, ethanol, isopropanol, n-propanol, butyl carbitol, dipropylene glycol monomethyl ether.

10. A method for preparing the treatment agent as claimed in claim 9, comprising the following steps:
(1) polymerizing monomers in an organic solvent to obtain a copolymer solution;
(2) optionally, adding water to the copolymer solution for dispersion, and then removing the organic solvent; or alternatively, removing the solvent firstly and then adding water for dispersion;
(3) optionally, adding an acid to the copolymer solution for converting an amino group into an ammonium salt;
(4) optionally, treating the copolymer solution with an aqueous hydrogen peroxide for converting the amino group into a nitrogen oxide.

11. A treatment process, comprising treating an article to be treated with the copolymer as claimed in any one of claims 1-8 or the treatment agent as claimed in claim 9 or the treatment agent prepared by the method as claimed in claim 10, preferably, the treatment comprises surface coating treatment or soaking treatment.

12. Use of the copolymer as claimed in any one of claims 1-8 or the treatment agent as claimed in claim 9 or the treatment agent prepared by the method as claimed in claim 10 in the process of surface coating treatment or soaking treatment for fiber fabrics, leathers, non-woven fabrics, asbestos, furs, concretes, natural stones, paper, or plastics.

13. Use of the copolymer as claimed in any one of claims 1-8 or the treatment agent as claimed in claim 9 or the treatment agent produced by the method as claimed in claim 10 in paper products, preferably, the use is the surface coating treatment, surface sizing treatment or wet end treatment for paper sheets, cardboards and pulp molding products.

14. A product treated with the copolymer as claimed in any one of claims 1-8 or the treatment agent as claimed in claim 9 or the treatment agent prepared by the method as claimed in claim 10, wherein the product is fiber fabrics, leathers, non-woven fabrics, asbestos, furs, concretes, natural stones, paper, or plastics.

15. A paper product, comprising paper and the copolymer as claimed in any one of claims 1-8 or the treatment agent as claimed in claim 9 or the treatment agent prepared by the method as claimed in claim 10 attached to the paper (internally and/or on surface).
